# EUROPEAN PATENT SPECIFICATION

(11) **EP 0 845 751 B1**
(45) Date of publication and mention of the grant of the patent: **02.01.2004**
(21) Application number: 97112781.6
(22) Date of filing: 24.07.1997
(51) Int. Cl.: G06K 7/08

(54) **A transponder system**
Transpondersystem
Système répondeur

(30) Priority: 02.12.1996 EP 96119314
(43) Date of publication of application: 03.06.1998
(73) Proprietor: TEXAS INSTRUMENTS DEUTSCHLAND GMBH, 85356 Freising (DE)
(72) Inventor: Schürmann, Josef H., 85416 Oberhummel (DE); Aslanidis, Konstantin O., 85221 Dachau (DE); Hagl, Andreas, 85221 Dachau (DE)
(74) Representative: Degwert, Hartmut, Dipl.-Phys.

(56) References cited:
- EP-A- 0 301 127
- EP-A- 0 600 374
- EP-A- 0 644 515
- EP-A- 0 681 192

## Description

The invention relates to a transponder system comprising an interrogation device and a transponder, which transponder after reception of interrogation data transmitted by the interrogation device transmits answer data, when the transponder has recognized the interrogation data as being interrogation data assigned to it.

A transponder system of this type is for instance disclosed in the European patent publication 301 127 B1. In this known transponder system the interrogation device transmits an interrogating signal to the transponder in the form of a radio frequency pulse with a predetermined duration. This radio frequency pulse is received by the transponder and by rectification employed for charging a storage capacitor. When at the end of the radio frequency pulse a voltage with a sufficient level is present at the capacitor, such capacitor is utilized as a supply voltage source for the electronic circuitry in the transponder. This electronic circuitry causes the transmission of an identifying code stored in the transponder. The interrogation device may then sense that a transponder with the received identification code is in its transmission range.

In the case of the known transponder system only limited energy is available for transmitting back the identification code, since the transponder is to be designed with small dimensions and there is consequently an upper limit to the size of the storage capacitor. Owing to the small amount of energy available the range of the signal transmitted by the transponder is also restricted.

The European patent publication 0 473 569 A discloses a transponder system, in which for the transmission of data from the transponder to the interrogation device ASK modulation is employed. In this type of modulation "0" and "1" data values of digital signals are transmitted by the emission of carrier signals with different amplitudes respectively assigned to one of the data values. This type of transmission is liable to interference, because sources of interference normally present in the surroundings may affect the amplitude of the signals so that interpretation of the signals is no longer possible without error. This type of modulation is more particularly furthermore unsuitable for mobile transponders, since movement of the transponder causes fluctuations in the amplitude of the transmitted signal, something which in turn may lead to misinterpretation of the signals.

A transponder arrangement described in the European patent publication 0 258 415 B utilizes Manchester encoding on data transmission between it and the interrogating device. In the transmission of signals with the "0" data value this type of encoding causes large pauses between the pulses, with which the "1' data values are transmitted. Such a type of encoding is unsuitable for passive transponders, which produce their power from the RF signals transmitted to them. For a large range for the signal transmitted back by the transponder, the long pauses in Manchester encoding mean that the power is then not sufficient. Moreover, the known transponder system described in the document operates in a low frequency range, in which large components (such as large capacitors and inductances) are necessary which operate correspondingly slowly.

In the European patent publication 0 600 374 Al a more complex transponder arrangement is disclosed with an additional basic unit, wherein the interrogator unit allows transmission of a programming sequence and thus the modification of the responder unit. A Pulse Width Modulation with a fixed bit length and a variable pause length or a Pulse Pause Modulation are proposed for the data transmission from the interrogating device to the responding unit. The data transmission from the responding unit to the interrogating device uses 2-FSK-modulation, with one frequency being the carrier frequency, and the other a frequency obtained by shifting the carrier frequency with a parallel-switched capacitor.

With the aid of the invention a transponder system is to be created, which renders possible safe transmission, with maximum freedom from interference, of data from the transponder to the interrogation device even over large distances, the system being economic to manufacture so that more especially the transponder may be a mass-produced article able to be employed for many applications.

In accordance with the invention this object is attained with a transponder system that has the following features:
a) the interrogation device transmits the interrogation data in the form of a pulse duration modulated carrier, in a narrow predetermined frequency range;
b) the transponder re-transmits the answer data as an FSK signal, with which FSK signal the received carrier is modulated, back to the interrogation device;
c) the production of the two FSK frequencies, corresponding to first and second data states of the answer data, is performed by frequency division of the carrier received by the transponder;
d) the two FSK frequencies are set so that they are derived by whole-numbered division ratios from the carrier frequency; and
e) the baud rate of the data transmission from the transponder to the interrogation device is set so that it is derived from the carrier frequency by a whole-numbered division ratio.

The transponder system of the invention is optimized in every respect as regards a trouble-free data transmission between the transponder and the interrogation device. As a consequence of the combination of features indicated the weak signal transmitted by the transponder is, with a high degree of probability, received intact by the interrogation device, since the selection of the frequencies concerned means that no collision occurs with known transmission frequencies.

In the practical implementation it is essential that the range of the FSK frequencies is so set that no carrier of a known transmitter comes within this range and that the two FSK frequencies are so set in this range that in the base band they are not interfered with by known transmission frequencies.

Moreover, the selected combination of features leads to the realization of the transponder with a minimum amount of hardware so that the aim strived at, the use of the transponder as a mass-produced article, is achieved.

Advantageous further developments of the invention are recited in the dependent claims.

The invention will now be described in detail with reference to the drawings showing a transponder system by way of example, to which the combination of features of the invention is applicable.

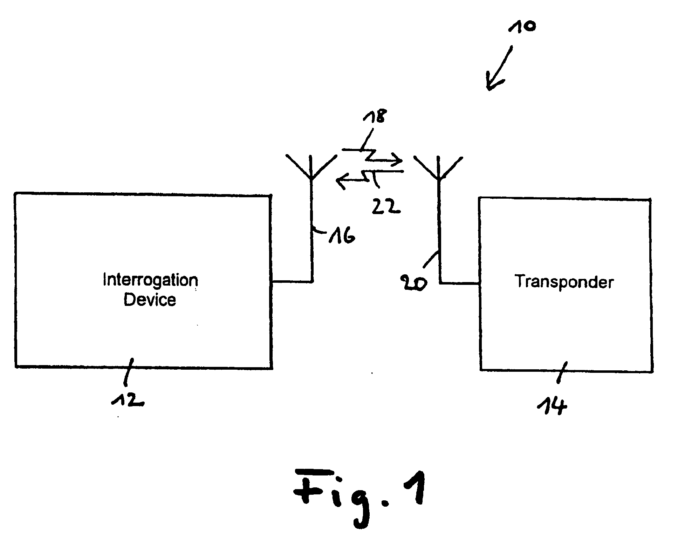

Figure 1 shows the basic scheme of a transponder system.
Figure 2 is a block circuit diagram of an interrogation device for explanation of the system of the invention.
Figure 3 is a block circuit diagram of a transponder for explanation of the system of the invention.
Figure 4 is a diagram for explanation of pulse duration modulation, with which data signals are transmitted from the interrogation device to the transponder.
Figure 4A and 4B are diagrams showing frequency spectra of frequency modulated signals.
Figure 5 is a circuit diagram showing an example of a demodulator suitable for use in the transponder sytem of the invention.
Figure 5A is a diagram showing the output signal of the signal shaper used in the demodulator of Figure 5.

A transponder system 10 comprises as its main parts an interrogation device 12 able to exchange data with at least one transponder 14. For initiating data exchange the interrogation device 12 transmits interrogation data 18 via its antenna 16 to the transponder 14, which receives such interrogation data by means of its antenna 20. As a reaction to the interrogation data the transponder then transmits answer data 22 back to the interrogation device 12, when it has recognized that the interrogation data were specially assigned to it. The interrogation device is then able to sense that within its transmission range distance that particular transponder has answered, for which the interrogation data were intended.

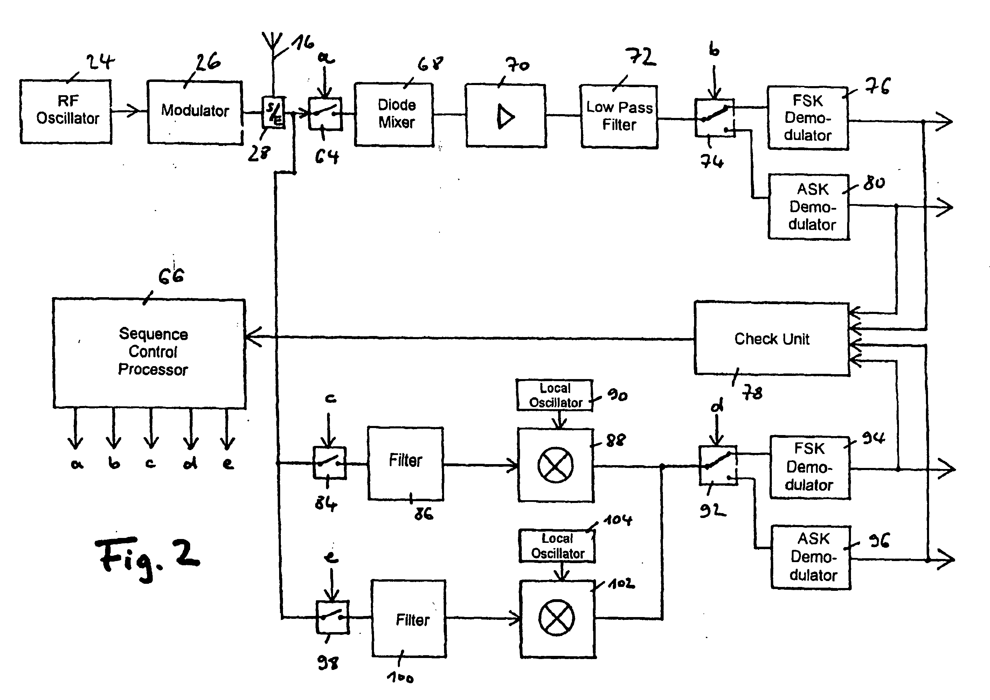

Figure 2 shows a block circuit diagram indicating how the interrogation device 12 may be designed. The interrogation device 12 comprises an RF oscillator, which produces a carrier frequency in the ISM frequency range. The name of such range is an acronym for "industrial, scientific and medical" and therefore indicates a range in which industrial, scientific and medical devices may be operated.

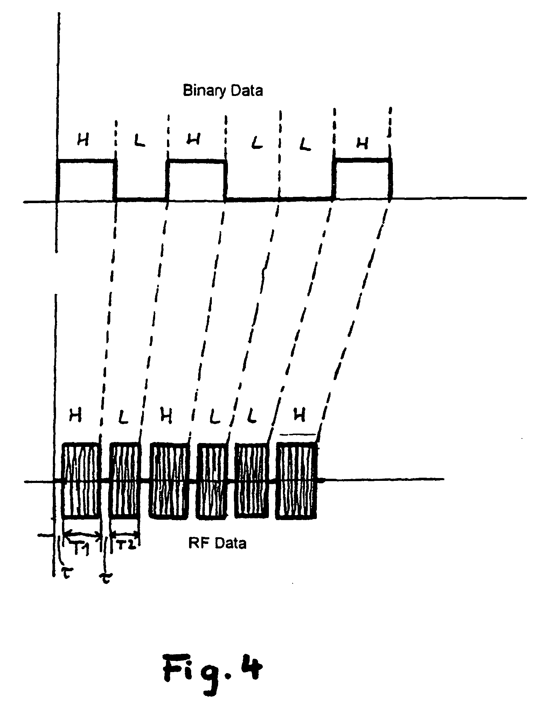

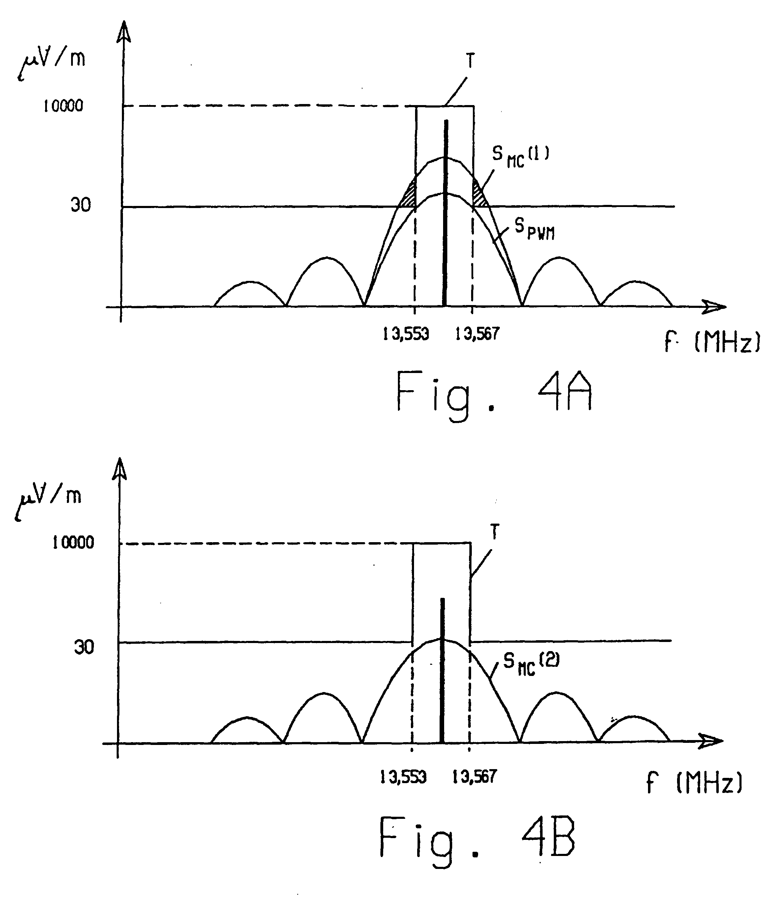

By means of a modulator 26 the carrier produced by the RF oscillator 24 is then modulated to represent data, such data for example being an address, which is stored in a transponder 14. By means of such address the transponder 14 is to be addressed in a predetermined manner and caused to transmit its identification code, which may be the same as its address. The modulated carrier is fed to the antenna 16 and radiated by same. The modulator brings about pulse duration modulation, which will be explained briefly with reference to figure 4. In the top part of figure 4 the digital bits of the interrogation signal to be transmitted are represented. The bottom part indicates how the RF carrier is modulated with such bits. In this respect it will be seen that each digital bit is initiated with a short pause interval of the duration τ, which functions as an initialization mechanism for the logic followed by an RF pulse with the duration T1, if the digital bit has the binary value of "1", whereas such RF pulse will have the duration T2, if the digital bit has the binary value of "0".

Using figure 4A an explanation will now be provided as to why this type of pulse duration modulation is well suited for rendering possible a larger distance between the interrogation device and the transponder. In this explanation it is to be taken into account that for the transmission of RF signals in different frequency ranges standards apply as regards the respective transmission field strengths in order to avoid mutual interference between transmitters operating in neighboring areas. For the transponder system to be described herein, which is to operate with a carrier frequency of 13.56 MHz, the FCC standards 15.225 and 15.209 apply. In a coordinate system with frequency as the horizontal graph axis and field strength as the vertical one, these two standards lead to a template T, which is to be taken into account as the upper threshold for the respective field strength at the respective frequencies. In accordance with these standards a carrier frequency between 13.553 MHz and 13,567 MHz shall not produce any field strength above 10,000 µV/m at a distance of 30 m. Without this range the field strength shall not exceed 30 µV/m.

In the case of the transmission of digital data with Manchester encoding, as described for example in "IEEE Communications Magazine", December 1984, vol. 22, no. 12 on page 23, a carrier, which at a distance of 30 m nearly reaches the limit field strength of 10,000 µV/m, will produce a modulation spectrum S_{MC}(1) exceeding the limits set in the said standards. The ranges are indicated by shading in figure 4a. Keeping to the limit values is hence only possible if the carrier power is reduced to such an extent that the field strength is not in excess of the permitted limit values, as is represented in figure 4b by the spectrum S_{MC}(2). This naturally means a reduction in the range of the transmitter, which operates with a reduced carrier power.

Pulse duration modulation employed in the transponder system to be described here and in which the sequentially following RF pulses are respectively separated by a pause of duration T, leads to a modulation spectrum, in which the limits set in the above mentioned standards are not exceeded, even if the carrier power produces a field strength which nearly reaches the upper limit of 10,000 µV/m. This spectrum is indicated in figure 4A as S_{PWM}. This means in practice that despite observing the limit values as set by the standards transmission may take place with a higher carrier power so that the distance between the transponder and the interrogating device may be made larger than in the case of a system operating with Manchester encoding. Since the duration t of the pulse pauses between the RF pulse is short in comparison with the duration of the pulses, it is possible for there to be an efficient transmission of energy to the transponder so that same will receive sufficient energy for the processing of the received data and the retransmission of the data, stored in it.

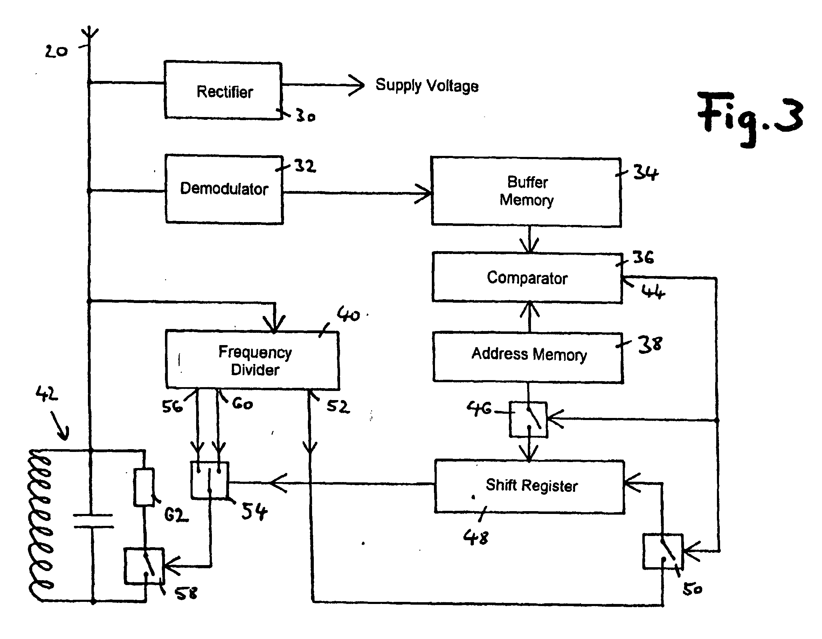

A description of the transponder will now be provided, whose block circuit diagram is represented in figure 3. More particularly the effect in the transponder 14 will be indicated by the reception of the interrogation signal, transmitted by the interrogation device 12. The interrogation signal received in the form of a sequence of radio frequency pulses is received by the antenna 20 of the transponder 14 and rectified in a rectifying circuit 30. The rectified voltage is buffered and serves as the supply voltage for the entire electronic circuitry present in the transponder 14. Since the pulse intervals t in accordance with figure 4 are short in comparison with the duration of the radio frequency pulses, there will always be sufficient voltage available for the supply of the electronic circuitry.

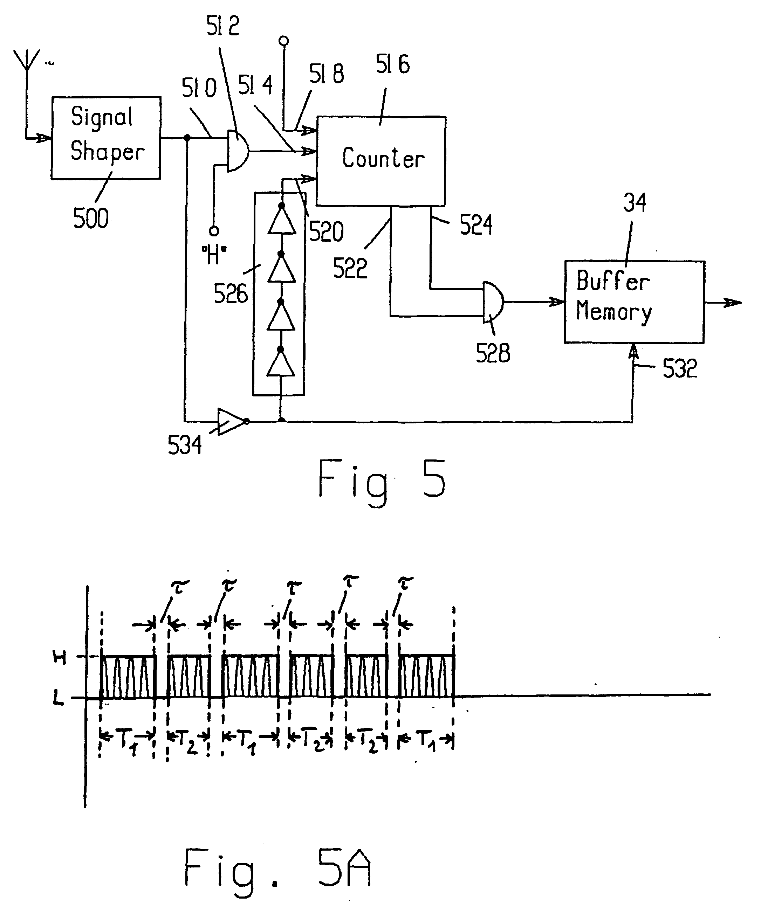

The interrogation signal received is demodulated in a demodulator 32. This demodulator 32 may be a conventional demodulator for pulse duration modulated signals. As an input stage the demodulator represented in figure 5 has a signal shaper 500, which re-shapes the RF signals received by the antenna by amplitude modulation, for instance with the aid of a diode, to yield a series of pulses with one polarity and of different duration, which are separated by pauses of the duration τ. The signal delivered by the signal shaper 500 has a high voltage value H, when a pulse with the duration T1 or T2 is present, and it has a low voltage value L, if the pulse pause with the duration **τ** occurs. The output signal of the signal former 500 is represented in figure 5A. In this respect it is to be noted that the information contained in this signal is not present in the form of the amplitude of the pulses but rather in the respective duration thereof, the long duration T1 meaning the data value of "1" and the short duration T2 meaning the data value of "0".

In the case of the demodulator depicted in figure 5 the signal delivered by the signal shaper 500 is supplied to the input 510 of an AND gate 512, that at the other input constantly receives a signal with the high voltage value H corresponding to the data value of "1". The output of the AND gate 512 is connected with the start input 514 of a counter 516, that furthermore possesses a clock input 518 and a cancel input 520. The counter 516 has a property such that after the reception of a start signal at the start input 514 it begins to count the clock signal supplied to its clock input 518. It has two outputs 522 and 524. At the output 522 an output signal with the data value of "1" appears, when the above mentioned time period T2 has elapsed, whereas, when the time period T1 has elapsed, it delivers a signal with the data value of "1" at both outputs 522 and 524. By way of the cancel input 520 the count of the counter 516 may be canceled, if, by way of a delay circuit 526 of, for example four NOT gates, a signal with the data value of "1" is supplied. The outputs 522 and 526 of the counter 516 are connected with the inputs of an AND gate 528, whose output is connected with the input of an intermediate memory 34, which on reception of an accept signal at its accept input 532 accepts and stores the signal value supplied to it from the AND gate 528. The accept signal is delivered by the output of a NOT gate 534, which is also connected with the input of the delay circuit 526 and whose input is connected with the input 510. At the output of the intermediate memory 34 it is possible for the data, received in the form of the RF signal by the antenna, to be accepted as demodulated binary data.

Assuming that we have the RF pulse sequence indicated in figure 4, a description will now be provided of how such a pulse sequence may be demodulated by the demodulator in figure 5.

As mentioned, by amplitude modulation, from the RF signal the signal shaper 500 produces a signal made up of square pulses of different duration, which are separated in each case by pulse pauses τ.

The first pulse delivered by the signal shaper 500 is a pulse with the longer duration T1, whose high voltage value H means that, owing to the high voltage value constantly present at its second input, the AND gate 512 delivers a signal with a high value of H, which by way of the start input 514 causes the counter 516 to start counting the clock signals supplied to its clock input 518. The capacity of the counter 516 and the frequency of the clock signal are so selected that at the end of the pulse, that is to say at the end of the duration T1, the counter reaches a count in the case of which a signal with a high value is present both at the output 522 and also at the output 524. The consequence of this is that at its output the AND gate 528 also delivers a signal with a high value, which is supplied to the input of the intermediate memory 34. As soon as the pulse with the duration T₁ ends and the pulse pause with the duration τ begins to run, at the input 510 there will be a signal with a low voltage value L, which is converted by the NOT gate 534 into a signal with a high voltage value H. Said signal passes to the accept input 532 of the intermediate memory 34 so that same is caused to accept and to store the high voltage value present at its input and representing the data value of "1". Simultaneously the signal with the high voltage value is supplied from the output of the NOT gate 534 after a delay in the delay circuit 526 to the cancel input 520 of the counter 516 so that the same is reset to the count of zero. The intermediate memory 34 will now contain the data value of "1" corresponding to the first RF pulse. In order for a plurality of data values of a data word to be able to stored in this intermediate memory 34, such intermediate memory is best designed in the form of a shift register, which on every occurrence of an accept signal at its accept input 532 shifts its content of data on farther by one stage and the while in addition accepts the next data value supplied to its input from the AND gate 528.

The reception of the data signal represented in figure 4 means that after elapse of the time period τ, that is to say of the pause between two RF pulses, an RF pulse with the short duration T2 is received. The reception of this pulse again leads to renewed operation of the counter 516 so that same starts counting the clock pulses again. At the end of the time period T2 the counter 516 will have reached a count at which it is only at the output 522 that a signal with the high value of "1" is delivered, whereas at the output 524 a signal with the low value of "0" appears. The consequence of this is at the output of the AND gate 528 a signal is delivered with the low value "0", which goes to the input of the intermediate memory 34. At the start of the next pulse pause with the duration τ the accept input 532 of the intermediate memory 34 is again supplied with a signal with the high value of "H" by the NOT gate 534 so that the data value of "0" corresponding to the low value L at the output of the AND gate 528 is stored in the intermediate memory 34.

In the manner described all RF pulses of the received RF data signal are converted into the data values "1" or "0" in accordance with their duration and are stored in the intermediate memory 34 in each case on occurrence of the accept signal at the input 532. As mentioned, the accept signal is in each case produced at the start of the pause between two RF pulses.

After demodulation of a complete data value the demodulated data are now available in the intermediate memory 34 and may be compared in a comparator 36 with the data stored in an address memory 38.

The signal received by the antenna 20 is also applied to a frequency divider 40, which, for a purpose yet to be explained, at three outputs provides switching signals, whose frequencies are each derived on applying whole-number division ratios from the carrier frequency of the interrogation signal. Furthermore owing to the continuously transmitted carrier of the interrogation data a resonant circuit 42 tuned to this carrier is caused to resonate.

If now the comparator 36 detects that the data in the intermediate memory 34 and the data in the address memory 38 are the same, it will provide a switching signal at its output 44 closing a switch 46. Such closing will have the effect that the data stored in the address memory 38 are transferred to a shift register 48. Simultaneously the switching signal, coming from the output 44 of the comparator 36, also closes a switch 50, which supplies a clock signal from the output 52 of the frequency divider 40 to the shift register 48. At the frequency of this clock signal the data will now be transferred from the shift register to a two-way switch 54, same always connecting the output 56 of the frequency divider 40 with the switching input of a switch 58, if the data value just coming from the shift register 48 has the one binary value, and if the data value from the shift register 48 has the other binary value, connecting the output 60 of the frequency divider 40 with the switch 58.

As already mentioned above the signals delivered from the outputs 56 and 60 of the frequency divider 40 have different frequencies, which correspond to the data values of "0" and "1" of the information to be transmitted. The signals delivered at the outputs 56 and 60 of the frequency divider 40 may be supplied, dependent on the setting of the two-way switch 54, to a switch 58, which is so designed that it is opened and closed with the respective frequency supplied to it by the frequency divider. Let it be assumed that a signal with the data value of "0" is delivered at the output of the shift register 48. This signal means that the two-way switch 54 is put in a setting, in which the output 60 of the frequency divider 40 is connected with the operating output of the switch 58. The switch 58 is consequently in this case opened and closed with the frequency of the signal delivered at the output 60 by the frequency divider 40.

As will be recognized, the closing of the switch 58 means that a resistor 62 is switched into circuit to be parallel to the resonant circuit 42. The resonant circuit 42 is accordingly damped by every closing of the switch. The result of this is that the basic oscillation of the resonant circuit 42 is subjected to amplitude modulation so that the spectrum of the signal able to be derived from the resonant circuit 42 comprises the basic oscillation, forming the carrier frequency, of the resonant circuit 42 and in addition two side bands, which correspond to the sum of and, respectively, the difference between the carrier frequency and the frequency at the output 60 of the frequency divider 40, the switch 58 being opened and closed at such frequency.

If now the shift register 48 delivers a signal with the data value of "1" at its output, the two-way switch 54 is put in a setting in which the output 56 of the frequency divider 40 is connected with the input of the switch 58 so that such switch 58 is then opened and closed at the frequency delivered at the output 56. In this case as well the resonant circuit 42 is then damped by the resistor 62 in step with the switching frequency of the switch 58 so that amplitude modulation of the carrier formed by the basic oscillation of the resonant circuit 42 is caused. The output spectrum of the resonant circuit 42 will then comprise the carrier frequency and two side bands, which correspond to the sum of and, respectively, the different between the carrier frequency and the frequency delivered by the output 56 of the frequency divider 40.

Therefore the antenna 20 transmits signals, which in their spectrum comprise a carrier frequency corresponding to the basic frequency of the resonant circuit 42 and in addition in each case two side bands, which are to be attributed to the amplitude modulation by the frequency from the output 60 of the frequency divider 40, when the shift register 48 delivers a signal with the one data value (in the above example, the data value of "0") or are to be attributed to the amplitude modulation by the frequency delivered by the output 56 of the frequency divider 40, if at its output the shift register 48 delivers a signal with another data value (in the example under consideration, the data value of "1"). Information transmission using the method described herein is accordingly transmission based on the FSK principle, in which the data values of a binary signal are transmitted by a first or a second frequency.

The baud rate of information transmission, i. e. the frequency, with which the individual data values follow each other, is set by the frequency, at which the shift register 48 delivers the individual data values. As will be seen from figure 3 and as has already been explained supra, the delivery of the data values takes place in step with the signal delivered by the output 52 of the frequency divider 40, which is supplied to the shift register 48 by way of the switch 50.

The interrogation device receives the FSK modulated carrier at the antenna 16 and passes same to the a switch 64 serving to de-couple the receive part of the interrogation device from the transmit part when the interrogation data are being transmitted. The closing of the switch is controlled by a sequence control processor 66, which applies a corresponding switching signal a to the switch 64 as soon as the transmission of the interrogation data is terminated.

The receive part of the interrogation device 12 comprises a conventionally designed diode mixer 68, which in a known manner may so demodulate the FSK modulated carrier that at its output the two FSK frequencies are available in the base band. The output signal of the diode mixer 68 is amplified in an amplifier 70 and filtered again in a low pass filter 72 so that now no carrier frequencies are present in the signal. Via a two-way switch 74 the signal is then supplied to an FSK demodulator 76, at whose output the demodulated data are available, which were transmitted by the transponder 14.

Such above-described demodulation of the received data is however not always possible in a satisfactory fashion owing to interference. For this reason further demodulation possibilities are provided for in the receive part of the interrogation device to contribute to increasing the safety of data transmission from the transponder back to the interrogation device. The data demodulated by the FSK demodulator 76 are supplied to a check device 78 which checks the data for integrity. Since it is known what type of data are returned by the transponders, such check unit may ascertain whether the data are meaningful, that is to say represent non-corrupted data with a high degree of probability, or whether owing to interference, such data have been corrupted. In the latter case the check unit 78 will feed a signal to the run control processor 66, which then applies a switching signal b to the two-way switch 74, such switching signal b so resetting the two-way switch 74 that the signal coming from the low pass filter 72 is supplied to an ASK demodulator 80. This demodulator can subject the signal to ASK demodulation, in which the binary values contained in the signal are not distinguished from one another as regards their frequency but rather as regards their amplitude. Since the two frequencies comprised in the output signal of the diode mixer 68 possess different values, the filtering action in the low pass filter 72 will namely lead to different amplitudes of the two signal components with the different frequencies so that accordingly it is not only possible to have demodulation as regards the two frequencies but also demodulation as regards the two amplitudes. Furthermore the output signal of the ASK demodulator 80 is again supplied to the check unit 78, same checking the demodulated data for integrity. If the check unit 78 ascertains that the data are meaningful, the data from the ASK demodulator are further processed as data transmitted by the transponder 14.

If the check unit 78 on the other hand detects a defect in the received data, it will again feed a control signal to the run control processor 66 causing same to supply a switching signal c to a switch 84, which, as indicated in figure 2, feeds the signal, which has been received by the antenna 16 and passed on by the transmit/receive switch 28 in the closed state to a filter 86, filtering out the upper side band from the spectrum of the received signals. In a mixer, which also gets the output frequency of a first local oscillator 90, the output signal of the filter 86 is converted in an intermediate frequency range, and this converted signal is supplied via a two-way switch 92 to an FSK demodulator 94, which by FSK demodulation recovers the transmitted data. As was previously the case the check unit 78 examines the integrity of the demodulated data.

If the data produced by the FSK demodulator are defective, the check unit 78 will again send a control signal to the run control processor 66, which then, by means of a switching signal d operates the two-way switch 92 so that instead of FSK demodulation by means of an ASK demodulator 96 ASK demodulation of the intermediate frequency signal, provided by the mixer 88, will be performed.

If the check unit 78 also detects a defective state of the signals from the ASK demodulator 96, it will cause the run control processor 66, using the control signal provided by the unit, to provide a switching signal for the switch 98 so that same is then closed and the signal received at the antenna 16 is supplied to a filter 100, which filters out the lower side band from the received signal. As in the previously described processing section the filtered signal is converted by a mixer 102, which also receives the output frequency of a local oscillator 104, into the intermediate frequency range. The converted IF signal is then subjected, as previously, to FSK demodulation or possibly ASK demodulation as well.

The above described form of signal processing in the receiving part of the interrogation device 12 shows that a plurality of possibilities are provided for deriving the transmitted data from the received signal with a high degree of reliability. It is in this manner that there is a high degree of probability that even under bad reception conditions the signal transmitted by the transponder with an extremely low power can be received and evaluated by the interrogation device.

For a specific application the carrier of the signal transmitted by the interrogation device is set to 13.56 MHz. The two frequencies, which respectively represent the data value "1" and the data value "0", are set at 484.2 kHz and, respectively, 423.75 kHz, since at such frequencies it is possible to ensure that the side bands produced during modulation do not collide with powerful transmitters known to exist. Moreover, having these two frequency values ensures that after conversion to the base band they do not collide with known medium or long wave transmitters either so that even in the case of very low power transmission by the transponder they can be processed by the interrogation device without any trouble.

The selection of the two frequencies furthermore offers the advantage that same may be derived from the carrier frequency by even-number division ratios. The higher frequency of 484.28 KHz results from division of the carrier frequency of 13.56 MHz by 28, whereas the lower frequency of 423.74 kHz results from a division of the carrier frequency by 32.

In order to ensure that the spectrum produced by the interrogation device on the basis of the baud rate of the transmitted signal interferes as little as possible with the signal transmitted back by the transponder, the baud rate is so selected that the two FSK frequencies are near a zero point of the spectrum. The setting of this baud rate may be influenced by a corresponding setting of the time periods τ, T1 and T2 of the signal transmitted by the interrogation device.

It is to be noted that the transponder system described herein is not dependent on the particular structure of the separate components described by way of example. For the degree of data safety aimed at with an economic design the primary question is rather the selection of suitable system parameters, same being defined in the patent claims.

## Claims

1. A transponder system comprising an interrogation device (12) and a transponder (14), which transponder after reception of interrogation data transmitted by the interrogation device (12) transmits answer data, when the transponder has recognized the interrogation data as being interrogation data assigned to it, wherein
a) the interrogation device (12) transmits the interrogation data in the form of a duration modulated carrier in a narrow predetermined frequency range;
b) the transponder (14) re-transmits the answer data as an FSK signal, with which FSK signal the received carrier is modulated, back to the interrogation device (12);
c) the generation of the two FSK frequencies, corresponding to first and second data states of the answer data, is performed by frequency division of the carrier received by the transponder (14);
d) the two FSK frequencies are set so that they are derived by whole-numbered division ratios from the carrier frequency; and
e) the baud rate of the data transmission from the transponder (14) to the interrogation device (12) is set so that it is derived from the carrier frequency by a whole-numbered division ratio.

2. The transponder system as claimed in claim 1, wherein the interrogation data are transmitted in the form of binarily encoded data, one binary value being transmitted by a radio frequency pulse of a first duration (T1) and the other binary value being transmitted by a radio frequency pulse of a second duration (T2), each radio frequency pulse being preceded by a pulse interval (t), whose duration is shorter than the said first and second duration.

3. The transponder system as claimed in claim 2, wherein the baud rate of transmission of the interrogation data is set so that the two FSK frequencies are near a zero point in the transmission spectrum produced by the interrogation device (12).

4. The transponder system as claimed in any one of the preceding claims, wherein the interrogation device (12) comprises a receiving part, which in a manner dependent on the integrity of the received data can be switched over to different types of demodulation.

5. The transponder system as claimed in claim 4, wherein the received data can be converted in the receiving part of the interrogation device (12) by diode mixing into the base band and in the base band may be subjected to FSK or ASK demodulation.

6. The transponder system as claimed in claim 4, wherein the received data may be obtained in the receiving part of the interrogation device (12) by demodulation of the upper side band or of the lower side band of the received spectrum.

7. The transponder system as claimed in any of the preceding claims, wherein said narrow predetermined frequency is the ISM range.

8. The transponder system as claimed in any of the preceding claims, wherein the carrier frequency used is 13.56 MHz, and wherein the higher FSK frequency is 484.28 kHz, resulting from division of said carrier frequency by 28, and wherein the lower FSK frequency is 423.75 kHz, resulting from division of said carrier frequency by 32.

## Patentansprüche

1. Transponder-System, das eine Abfragevorrichtung (12) und einen Transponder (14) umfasst, wobei der Transponder nach dem Empfang von Abfragedaten, die von der Abfragevorrichtung (12) gesendet werden, Antwortdaten sendet, wenn der Transponder die Abfragedaten als für ihn bestimmte Abfragedaten erkannt hat, wobei
a) die Abfragevorrichtung (12) die Abfragedaten in Form eines zeitdauermodulierten Trägers in einem schmalen vorgegebenen Frequenzbereich sendet;
b) der Transponder (14) die Antwortdaten als FSK-Signal, mit dem der empfangene Träger moduliert wird, an die Abfragevorrichtung (12) zurücksendet;
c) die Erzeugung der beiden FSK-Frequenzen, die einem ersten und einem zweiten Datenzustand der Antwortdaten entsprechen, durch Frequenzteilung des von dem Transponder (14) empfangenen Trägers ausgeführt wird;
d) die zwei FSK-Frequenzen so bestimmt sind, dass sie durch ganzzahlige Teilungsverhältnisse aus der Trägerfrequenz abgeleitet werden; und
e) die Baudrate der Datenübertragung vom Transponder (14) zur Abfragevorrichtung (12) so bestimmt ist, dass sie aus der Trägerfrequenz durch ein ganzzahliges Teilungsverhältnis abgeleitet wird.

2. Transpondersystem nach Anspruch 1, bei dem die Abfragedaten in Form binär codierter Daten gesendet werden, wobei ein Binärwert durch einen Funkfrequenzimpuls einer ersten Zeitdauer (T1) gesendet wird und der andere Binärwert durch einen Funkfrequenzimpuls einer zweiten Zeitdauer (T2) gesendet wird, wobei jedem Funkfrequenzimpuls ein Impulsintervall (τ) vorhergeht, dessen Zeitdauer kürzer als die erste und die zweite Zeitdauer ist.

3. Transpondersystem nach Anspruch 2, bei dem die Baudrate der Übertragung der Abfragedaten so gesetzt ist, dass die zwei FSK-Frequenzen im Übertragungsspektrum, das durch die Abfragevorrichtung (12) erzeugt wird, nahe bei einem Nullpunkt liegen.

4. Transpondersystem nach einem der vorhergehenden Ansprüche, bei dem die Abfragevorrichtung (12) einen Empfangsabschnitt umfasst, der in einer von der Integrität der empfangenen Daten abhängigen Weise zu verschiedenen Demodulationstypen umgeschaltet werden kann.

5. Transpondersystem nach Anspruch 4, bei dem die empfangenen Daten im Empfangsteil der Abfragevorrichtung (12) durch Diodenmischung in das Grundband umgesetzt werden können und das Grundband einer FSK- oder ASK-Demodulation unterworfen werden kann.

6. Transpondersystem nach Anspruch 4, bei dem die empfangenen Daten im Empfangsteil der Abfragevorrichtung (12) durch Demodulation des oberen Seitenbandes oder des unteren Seitenbandes des empfangenen Spektrums erhalten werden können.

7. Transpondersystem nach einem der vorhergehenden Ansprüche, bei dem der schmale vorgegebene Frequenzbereich der ISM-Bereich ist.

8. Transpondersystem nach einem der vorhergehenden Ansprüche, bei dem die verwendete Trägerfrequenz 13,56 MHz beträgt, bei dem die höhere FSK-Frequenz 484,28 kHz beträgt und sich aus der Teilung der Trägerfrequenz durch 28 ergibt und bei dem die niedrigere FSK-Frequenz 423,75 kHz beträgt und sich aus der Teilung der Trägerfrequenz durch 32 ergibt.

## Revendications

1. Système de répondeur d'identification comportant un dispositif d'interrogation (12) et un répondeur d'identification (14), lequel répondeur après réception de données d'interrogation émises par le dispositif d'interrogation (12) émet des données de réponse, quand il a reconnu les données d'interrogation comme étant des données d'interrogation lui étant destinées, dans lequel :
a) le dispositif d'interrogation (12) émet les données d'interrogation sous la forme d'une porteuse modulée en durée dans une bande de fréquences prédéterminée étroite ;
b) le répondeur (14) renvoie au dispositif d'interrogation (12) les données de réponse sous forme de signal FSK (Frequency -Shift Keying - modulation par déplacement de fréquence), avec lequel la porteuse reçue est modulée ;
c) la génération des deux fréquences FSK, correspondant au premier et deuxième état des données de réponse se fait par division de fréquence de la porteuse reçue par le répondeur (14) ;
d) les deux fréquences FSK sont fixées de façon à ce qu'elles soient déduites de la fréquence porteuse par des rapports de division entiers ; et
e) le débit en bauds de la transmission de données entre le répondeur (14) et le dispositif d'interrogation (12) est fixé de façon à ce qu'il soit déduit de la fréquence porteuse par un rapport de division entier.

2. Système de répondeur d'identification selon la revendication 1, dans lequel les données d'interrogation sont émises sous forme de données codées de façon binaire, une valeur binaire étant émise par une impulsion haute fréquence d'une première durée (T1) et l'autre valeur binaire étant émise par une impulsion haute fréquence d'une deuxième durée(T2), chaque impulsion haute fréquence étant précédée d'un intervalle entre impulsions (τ) dont la durée est inférieure auxdites première et deuxième durées.

3. Système de répondeur d'identification selon la revendication 2, dans lequel le débit en bauds de l'émission des données d'interrogation est fixé de façon à ce que les deux fréquences FSK soient proches d'un point zéro du spectre d'émission généré par le dispositif d'interrogation (12).

4. Système de répondeur d'identification selon l'une quelconque des revendications précédentes, dans lequel le dispositif d'interrogation (12) comporte une partie réceptrice sur laquelle on peut se commuter pour différents types de démodulation de façon dépendante de l'intégrité des données reçues.

5. Système de répondeur d'identification selon la revendication 4, dans lequel les données reçues peuvent être converties dans la partie réceptrice du dispositif d'interrogation (12) par un mélangeur à diode dans la bande de base et être soumises dans la bande de base à un démodulation FSK ou ASK (Amplitude Shift Keying - modulation par sauts d'amplitude).

6. Système de répondeur d'identification selon la revendication 4, dans lequel les données reçues peuvent être obtenues dans la partie réceptrice du dispositif d'interrogation (12) par démodulation de la bande latérale supérieure ou de la bande latérale inférieure du spectre reçu.

7. Système de répondeur d'identification selon l'une quelconque des revendications précédentes, dans lequel ladite gamme de fréquences étroite prédéterminée est la gamme ISM.

8. Système de répondeur d'identification selon l'une quelconque des revendications précédentes, dans lequel la fréquence porteuse utilisée est égale à 13,56 MHz et dans lequel la fréquence FSK haute est égale à 484,28 kHz, et résulte de la division de ladite fréquence porteuse par 28, et dans lequel la fréquence FSK basse est égale à 423,75 kHz et résulte de la division de ladite fréquence porteuse par 32.
